# EUROPÄISCHE PATENTSCHRIFT

(11) **EP 2 946 128 B1**
(45) Veröffentlichungstag und Bekanntmachung des Hinweises auf die Patenterteilung: **20.02.2019**
(21) Anmeldenummer: 14704087.7
(22) Anmeldetag: 17.01.2014
(51) Int. Cl.: F16F 15/30, B21D 53/26

(54) **VERFAHREN ZUR HERSTELLUNG EINES DREHSCHWINGUNGSDÄMPFERS**
METHOD FOR PRODUCING A ROTARY VIBRATION DAMPER
PROCÉDÉ DE FABRICATION D'UN AMORTISSEUR DE VIBRATIONS DE TORSION

(30) Priorität: 17.01.2013 DE 102013100450
(43) Veröffentlichungstag der Anmeldung: 25.11.2015
(73) Patentinhaber: Winkelmann Powertrain Components GmbH + Co. KG, 59227 Ahlen (DE)
(72) Erfinder: COLFORD, Terry, Leicester Leicestershire LE7 3FS (GB); BUSCH, Martin, 58730 Fröndenberg (DE)
(74) Vertreter: Meinke, Jochen
(86) Internationale Anmeldenummer: PCT/EP2014/050853
(87) Internationale Veröffentlichungsnummer: WO 2014/111494

(56) Entgegenhaltungen:
- DE-A1- 4 322 855
- DE-A1- 19 743 686
- DE-C- 676 341
- DE-C1- 4 241 156

## Beschreibung

Die Erfindung betrifft ein Verfahren zur Herstellung eines Drehschwingungsdämpfers mit einem drehfest mit einer Welle verbindbaren Nabenteil und einem über eine Elastomerschicht mit dem Nabenteil verbundenen Schwungringteil, wobei die Elastomerschicht in einem Spalt zwischen dem Schwungringteil und einem zum Schwungringteil koaxialen Bereich des Nabenteils angeordnet ist, wobei das Nabenteil und das Schwungringteil zunächst in Form eines einstückigen Werkstückes hergestellt und anschließend das Nabenteil und das Schwungringteil mechanisch voneinander getrennt werden.

Bei der Herstellung von Drehschwingungsdämpfern, die insbesondere für Kurbelwellen von Verbrennungsmotoren bestimmt sind, ist es allgemein bisher üblich, zunächst das Nabenteil und das Schwungringteil gesondert herzustellen, anschließend beide Teile in eine Form einzulegen und nachfolgend in den sich zwischen dem Nabenteil und dem Schwungringteil ergebenden Spalt eine Elastomerschicht einzubringen. Eine solche Fertigung ist jedoch relativ aufwendig.

Es ist aus DE 42 41 156 C1 bereits ein Verfahren mit den Merkmalen des Oberbegriffes des Patentanspruches 1 bekannt geworden, bei dem die im fertigen Drehschwingungsdämpfer als Schwungringteil und Nabenteil wirkenden Metallteile unter Einschluss des von angenähert koaxialen Flanschen und einer zunächst geschlossenen, durch ein Stirnwandteil gebildeten Stirnseite umschlossenen Spaltes für die Elastomerschicht einstückig gefertigt werden, wobei danach die Elastomerschicht in den Spalt eingebracht wird und schließlich das Schwungringteil und das Nabenteil durch mechanische Abtrennung des den Spalt für die Elastomerschicht überbrückenden Stirnwandteils gebildet werden. Dabei kann das zunächst einstückige Metallteil aus tiefgezogenem Blech oder alternativ als Gussteil hergestellt werden. In der Praxis hat sich dieses Bauteil jedoch nicht durchgesetzt, da es herstellungstechnisch sehr schwer zu realisieren ist.

Aus DE 197 43 886 C2 ist ein weiteres Verfahren zur Herstellung eines Drehschwingungsdämpfers bekannt, bei welchem das Schwungringteil und das Nabenteil mit einer Sollbruchstelle an der Übergangsstelle in Gestalt eines einteiligen Werkstückes erzeugt werden, wobei die Sollbruchstelle vor oder nach dem Einfügen der Elastomerschicht ohne Werkstoffentnahme zerstört wird und wobei das Nabenteil und/oder das Schwungringteil zur Zerstörung der Sollbruchstelle in axialer Richtung gegeneinander verschoben werden. Zur Realisierung eines solchen Drehschwingungsdämpfers mit Sollbruchstelle wird das einteilige Werkstück durch Schmieden, Gießen und/oder ein spanabhebende Bearbeitung erzeugt. Diese Herstellungsverfahren sind allesamt relativ aufwändig und kostenintensiv.

Aufgabe der Erfindung ist es, ein solches Verfahren derart zu verbessern, dass die Herstellung wesentlich vereinfacht werden kann und kostengünstiger ist.

Diese Aufgabe wird beim Verfahren der eingangs bezeichneten Art erfindungsgemäß dadurch gelöst, dass zur Bildung des einstückigen Werkstückes zunächst ein scheibenförmiger Blechrohling in eine topfförmige Form derart umgeformt wird, dass das einstückige Werkstück angrenzend an den Topfboden den koaxialen Bereich des Nabenteils, daran angrenzend einen radial erstreckten ring- oder kegelförmigen Stegbereich und an diesen angrenzend und axial beabstandet zum koaxialen Bereich das Schwungringteil aufweist, wobei das einstückige Werkstück anschließend durch Trennung des ringförmigen Stegbereichs in axialer Richtung in das Nabenteil und das Schwungringteil aufgeteilt wird, wobei nach der Trennung des einstückigen Werkstückes das Nabenteil gegenüber dem Schwungringteil relativ um 180° rechtwinklig zur Rotationsachse gedreht wird und anschließend das Schwungringteil auf dem Nabenteil so angeordnet wird, dass der zwischen dem koaxialen Bereich des Nabenteils und dem Schwungringteil gebildete Spalt an einer Seite durch die jeweiligen Stegteilbereiche begrenzt wird.

Das erfindungsgemäße Verfahren lässt sich im Wesentlichen allein durch Umformen gegenüber dem Stand der Technik wesentlich einfacher herstellen. Als Umformverfahren ist z.B. Tiefziehen geeignet oder ein verwandtes Umformverfahren, z.B. mittels Drückrollen. Das einstückige Werkstück in Topfform kann außerdem als geschlossene Einheit transportiert und gelagert werden bis die Trennung und nachfolgende Verbindung mit der Elastomerschicht erfolgt. Durch die um 180° gedrehte Anordnung ist der umlaufende Ringspalt dann auf der einen Seite völlig offen und weist zumindest zum Nabenbereich hin abgerundete Kanten auf, welche das Einpressen der Elastomerschicht erleichtern. Auf der anderen Seite ist der Spalt mehr oder weniger geschlossen, je nachdem, wie die beiden aus dem ursprünglichen ringförmigen Stegbereich gebildeten Stegteilbereiche dimensioniert sind. Gewünschtenfalls kann der Spalt auch nahezu vollständig geschlossen sein. Auch ist zur Erzeugung der jeweils erforderlichen Spaltbreite auf einfache Weise eine Anpassung bei der Herstellung des einstückigen Werkstückes möglich, in dem die Ausgangsbreite des ringförmigen Stegbereiches entsprechend dimensioniert wird.

Nach einer ersten Ausgestaltung ist bevorzugt vorgesehen, dass die Elastomerschicht in den Spalt eingepresst wird. Alternativ kann die Elastomerschicht auch einvulkanisiert oder im post-banding-Prozess geheftet werden.

Das erfindungsgemäße Verfahren bietet auch die besonders bevorzugte Möglichkeit, die Schwungringmasse des Schwungringteils unterschiedlich zu dimensionieren. Dazu ist in Ausgestaltung vorgesehen, dass bei der Herstellung des einstückigen Werkstückes die Wandstärke des Schwungringteils verdickt wird. Dies kann auf bekannte Weise erfolgen. Eine Möglichkeit ist z.B. den Außenrandbereich in axialer Richtung um 180 Grad nach außen umzulegen. Auch ein Bordieren oder Kollapsen ist möglich.

Insbesondere dann, wenn der Randbereich des Schwungringteils verdickt wird, ist in weiterer bevorzugter Ausgestaltung vorgesehen, dass in das Schwungringteil eine Außenprofilierung eingebracht wird.

Diese Außenprofilierung ist bevorzugt ein Riemenprofil.

Die Erfindung ist nachstehend anhand der Zeichnungen beispielshaft näher erläutert. Diese zeigt jeweils im Schnitt in
Fig. 1 einen scheibenförmigen Blechrohling,
Fig. 2 ein aus dem Rohling nach Fig. 1 hergestelltes einstückiges Werkstück,
Fig. 3 die Trennung des einstückigen Werkstückes nach Fig. 2 in ein Nabenteil und ein Schwungringteil und
Fig. 4 einen fertigen Drehschwingungsdämpfer.

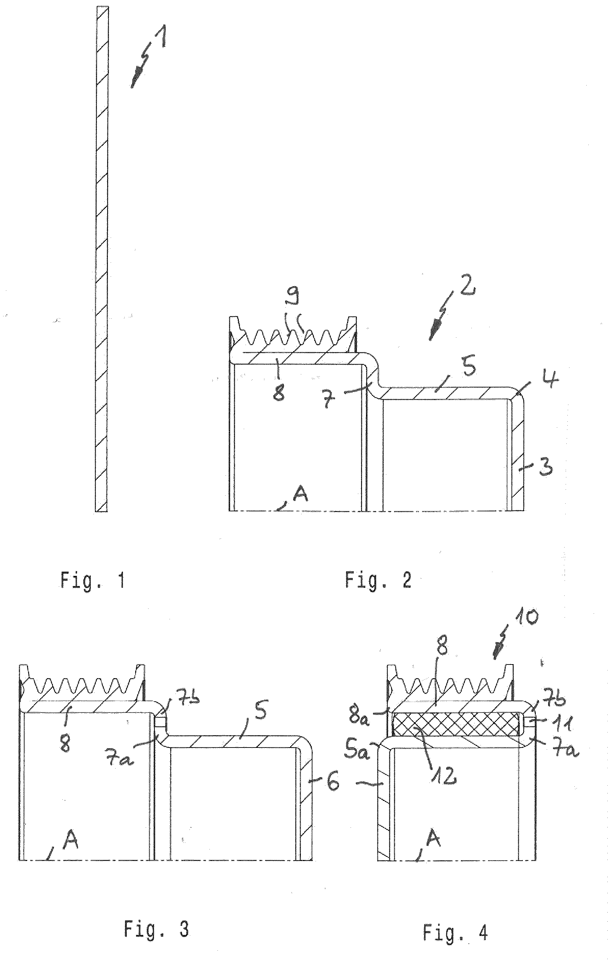

Ein Ausgangprodukt für die Durchführung des erfindungsgemäßen Verfahrens ist in Fig. 1 dargestellt, nämlich ein mit 1 bezeichneter scheibenförmiger Blechrohling. Dieser scheibenförmige Blechrohling 1 wird in einem ersten Verfahrensschritt durch Umformen, z.B. durch Tiefziehen, in ein in Fig. 2 allgemein mit 2 bezeichnetes einstückiges Werkstück umgeformt. Dabei wird der Blechrohling 1 in eine topfförmige Form umgeformt, sodass das einstückige Werkstück 2 nach dieser Umformung einen Topfboden 3 aufweist, der Bestandteil des nachfolgend hergestellten Nabenteils des zu erzeugende Drehschwingungsdämpfers ist. Dieser Topfboden 3 geht beim dargestellten Ausführungsbeispiel in einen Übergangsbereich 4 über, welcher in einen zur Symmetrieachse A koaxialen Bereich 5 des später erzeugten Nabenteils 6 (Fig. 3) des Drehschwingungsdämpfers übergeht. Dieser koaxiale Bereich 5 des Nabenteils 6 geht in einen radial erstreckten ring- oder kegelförmigen Stegbereich 7 über, welcher seinerseits am radial äußeren Enden in ein im wesentlichen axial erstrecktes, koaxial zur Symmetrieachse A angeordnetes Schwungringteil 8 übergeht.

Dieses Schwungringteil 8 kann beim Umformvorgang eine Wandstärkenverdickung erfahren, d.h. gegenüber der Ausgangswandstärke des Blechrohlings 1 ist die Wandstärke des Schwungringteils 8 vergrößert. Eine solche Wandstärkenverdickung im Bereich des Schwungringteils 8 ist z.B. dann vorgesehen, wenn das Schwungringteil 8 radial außenseitig zusätzlich mit einer Außenprofilierung 9, z.B. einer Riemenprofilierung, versehen wird. Im Rahmen der Erfindung kann das Schwungringteil 8 aber auch eine Wandstärke aufweisen, die der Ausgangswandstärke entspricht oder durch Abstrecken verjüngt ist, und auch nicht profiliert sein. Die Wandstärkenverdickung des Schwungringteils 8 kann ebenfalls durch Umformen erzeugt werden, z.B. durch Umlegen des Randbereiches (wie dargestellt) oder auch mittels Drückrollen, hierauf kommt es im Einzelnen im Rahmen der Erfindung nicht an.

Das in Fig. 2 dargestellte einstückige Werkstück 2 weist somit bereits die nahezu fertige Endkontur sowohl des Nabenteils 6 als auch des Schwungringteils 8 des zu bildenden, in Fig. 4 mit 10 bezeichneten Drehschwingungsdämpfers auf.

Im nachfolgenden Verfahrensschritt wird das einstückige Werkstück 2 durch Trennung des ring- oder kegelförmigen Stegbereichs 7 in axialer Richtung in das Nabenteil 6 und das Schwungringteil 8 aufgeteilt. Dieser Zustand ist in Fig. 3 dargestellt. Das Nabenteil 6 weist nach der Trennung des einstückigen Werkstückes 2 im Trennbereich dann einen radial nach außen erstreckten Stegteilbereich 7a und das Schwungringteil 8 einen radial nach innen erstreckten Stegteilbereich 7b auf.

In einem weiteren Verfahrensschritt wird nun das Schwungringteil 8 so auf dem Nabenteil 6 angeordnet, dass zwischen dem Schwungringteil 8 und dem koaxialen Bereich 5 des Nabenteils 6 ein umlaufender Spalt 11 gebildet wird. In besonders bevorzugter Ausgestaltung des erfindungsgemäßen Verfahrens ist dabei vorgesehen, dass das Nabenteil 6 gegenüber dem Schwungringteil 8 zuvor relativ um 180 Grad rechtwinklig zur Rotationsachse gedreht wird und dementsprechend so auf dem Nabenteil 6 angeordnet wird, dass der zwischen dem koaxialen Bereich 5 des Nabenteils 6 und dem Schwungringteil 8 gebildete Spalt 11 an einer Seite durch die beiden Stegteilbereiche 7a und 7b begrenzt ist. Diese Anordnung ist in Fig. 4 dargestellt. In dieser Position der beiden Bauteile (Nabenteil 6 und Schwungringteil 8) werden diese in eine Form eingebracht und anschließend wird eine Elastomerschicht 12 vorzugsweise in den Spalt 11 eingepresst, welche die beiden Bauteile zur Bildung des Drehschwingungsdämpfers 10 miteinander verbindet.

Das Einpressen der Elastomerschicht 12 wird durch die in Fig. 4 dargestellte Anordnung des Schwungringteils 8 auf dem Nabenteil 6 deutlich erleichtert, da der Spalt 11 auf der linken Seite vollständig offen ist und durch die Umformung bedingt, die beiden Randbereiche 5a bzw. 8a des koaxialen Bereichs 5 des Nabenteils 6 und des Schwungringteils 8 nach außen abgerundet sind. Auf der gegenüberliegenden Seite ist der Spalt 11 durch die Stegteilbereiche 7a, 7b begrenzt, wobei der Spalt 11 gewünschtenfalls durch entsprechende Dimensionierung der Stegteilbereiche 7a, 7b auch vollständig geschlossen sein kann. Dies kann in Anpassung an die jeweilige Dicke der Elastomerschicht 12 bei der Umformung (Fig. 1 nach Fig. 2) berücksichtigt werden, indem die radiale Erstreckung des Stegbereichs 7 bei der Umformung größer oder kleiner dimensioniert wird.

Natürlich ist die Erfindung nicht auf die dargestellten Ausführungsbeispiele beschränkt. Weitere Ausgestaltungen sind möglich, ohne den Grundgedanken zu verlassen. So kann das Schwungringteil 8 auch nur eine Dämpfmasse ohne Außenprofilierung 9 bilden. Dies hängt vom jeweiligen Einsatzweck des Drehschwingungsdämpfers 10 ab.

### Bezugszeichenliste:

- 1: Blechrohling
- 2: einstückiges Werkstück
- 3: Topfboden
- 4: Übergangsbereich
- 5: Koaxialer Bereich
- 6: Nabenteil
- 7: ring- oder kegelförmiger Stegbereich
- 7a, 7b: Stegteilbereich
- 8: Schwungringteil
- 9: Außenprofilierung
- 10: Drehschwingungsdämpfer
- 11: Spalt
- 12: Elastomerschicht

## Patentansprüche

1. Verfahren zur Herstellung eines Drehschwingungsdämpfers mit einem drehfest mit einer Welle verbindbaren Nabenteil und einem über eine Elastomerschicht mit dem Nabenteil verbundenen Schwungringteil, wobei die Elastomerschicht in einem Spalt zwischen dem Schwungringteil und einem zum Schwungringteil koaxialen Bereich des Nabenteils angeordnet ist, wobei das Nabenteil und das Schwungringteil zunächst in Form eines einstückigen Werkstückes hergestellt und anschließend das Nabenteil und das Schwungringteil mechanisch voneinander getrennt werden,
wobei zur Bildung des einstückigen Werkstückes (2) zunächst ein scheibenförmiger Blechrohling (1) in eine topfförmige Form derart umgeformt wird, dass das einstückige Werkstück (2) angrenzend an den Topfboden (3) den koaxialen Bereich (5) des Nabenteils (6), daran angrenzend einen radial erstreckten ring- oder kegelförmigen Stegbereich (7) und an diesen angrenzend und axial beabstandet zum koaxialen Bereich (5) das Schwungringteil (8) aufweist, wobei das einstückige Werkstück (2) anschließend durch Trennung des ringförmigen Stegbereichs (7) in axialer Richtung in das Nabenteil (6) und das Schwungringteil (8) aufgeteilt wird, **dadurch gekennzeichnet, dass** nach der Trennung des einstückigen Werkstückes (2) das Nabenteil (6) gegenüber dem Schwungringteil (8) relativ um 180 Grad gedreht wird und anschließend das Schwungringteil (8) auf dem Nabenteil (6) so angeordnet wird, dass der zwischen dem koaxialen Bereich (5) des Nabenteils (6) und dem Schwungringteil (8) gebildete Spalt (11) an einer Seite durch die jeweiligen Stegteilbereiche (7a, 7b) begrenzt wird.

2. Verfahren nach Anspruch 1,
**dadurch gekennzeichnet,**
**dass** die Elastomerschicht (12) in den Spalt (11) eingebracht wird.

3. Verfahren nach Anspruch 1 oder 2,
**dadurch gekennzeichnet,**
**dass** bei der Herstellung des einstückigen Werkstückes (2) die Wandstärke des Schwungringteils (8) verdickt wird.

4. Verfahren nach einem oder mehreren der Ansprüche 1 bis 3,
**dadurch gekennzeichnet,**
**dass** in das Schwungringteil (8) eine Außenprofilierung (9) eingebracht wird.

5. Verfahren nach Anspruch 4,
**dadurch gekennzeichnet,**
**dass** die Außenprofilierung (9) ein Riemenprofil ist.

## Claims

1. Method for producing a rotary vibration damper with a hub part connectable in a rotationally secure manner to a shaft and a flywheel rim part connected to the hub part by means of an elastomer layer, wherein the elastomer layer is arranged in a gap between the flywheel rim part and an area of the hub part coaxial to the flywheel rim part, wherein the hub part and the flywheel rim part are first produced in the form of a one-piece workpiece and then the hub part and the flywheel rim part are separated from one another mechanically,
wherein to form the one-piece workpiece (2) firstly a disc-shaped blank plate (1) is formed into a well shape such that the one-piece workpiece (2) has adjacent to the well bottom (3) the coaxial area (5) of the hub part (6), adjacent thereto a radially extended annular or conical web area (7) and adjacent thereto and spaced apart axially from the coaxial area (5) the flywheel rim part (8), wherein the one-piece workpiece (2) is divided afterwards by separating the annular web area (7) in axial direction into the hub part (6) and the flywheel rim part (8), **characterised in that**
after the separation of the one-piece workpiece (2) the hub part (6) is rotated relative to the flywheel rim part (8) by 180 degrees and then the flywheel rim part (8) is arranged on the hub part (6) so that the gap (11) formed between the coaxial area (5) of the hub part (6) and the flywheel rim part (8) is delimited on one side by the respective web areas (7a, 7b).

2. Method according to claim 1,
**characterised in that**
the elastomer layer (12) is incorporated into the gap (11).

3. Method according to claim 1 or 2,
**characterised in that**
during the production of the one-piece workpiece (2) the wall thickness of the flywheel rim parts (8) is thickened.

4. Method according to one or more of claims 1 to 3,
**characterised in that**
an external profiling (9) is incorporated into the flywheel rim part (8).

5. Method according to claim 4,
**characterised in that**
the external profiling (9) is a belt profile.

## Revendications

1. Procédé de fabrication d'un amortisseur de vibrations torsionnelles avec une partie moyeu pouvant être reliée à un arbre de manière solidaire en rotation et avec une partie anneau oscillant reliée à la partie moyeu par l'intermédiaire d'une couche d'élastomère, laquelle couche d'élastomère est agencée dans une fente entre la partie anneau oscillant et une zone, coaxiale à la partie anneau oscillant, de la partie moyeu,
dans lequel la partie moyeu et la partie anneau oscillant sont d'abord fabriquées sous la forme d'une pièce d'un seul tenant et la partie moyeu et la partie anneau oscillant sont ensuite séparées mécaniquement l'une de l'autre, dans lequel, pour former la pièce d'un seul tenant (2), une ébauche en tôle (1) d'un seul tenant en forme de disque est d'abord déformée en une forme de pot de telle sorte que la pièce (2) d'un seul tenant présente, adjacente au fond de pot (3) la zone coaxiale (5) de la partie moyeu (6), adjacente à celle-ci une zone de traverse (7) en forme d'anneau ou de cône s'étendant radialement et adjacente à celle-ci et axialement distante de la zone coaxiale (5) la partie anneau oscillant (8), dans lequel la pièce (2) d'un seul tenant est ensuite divisée dans la direction axiale, par séparation de la zone de traverse (7) en forme d'anneau, en la partie moyeu (6) et la partie anneau oscillant (8), **caractérisé en ce que**,
après la séparation de la pièce (2) d'un seul tenant, la partie moyeu (6) est tournée de 180° par rapport à la partie anneau oscillant (8) puis la partie anneau oscillant (8) est agencée sur la partie moyeu (6) de telle sorte que la fente (11) formée entre la zone coaxiale (5) de la partie moyeu (6) et la partie anneau oscillant (8) est délimitée d'un côté par les zones partielles de traverse (7a, 7b) respectives.

2. Procédé selon la revendication 1,
**caractérisé en ce que**
la couche d'élastomère (12) est introduite dans la fente (11).

3. Procédé selon la revendication 1 ou 2,
**caractérisé en ce que**,
lors de la fabrication de la pièce d'un seul tenant (2), l'épaisseur de paroi de la partie anneau oscillant (8) est épaissie.

4. Procédé selon une ou plusieurs des revendications 1 à 3, **caractérisé en ce qu'**un profil extérieur (9) est introduit dans la partie anneau oscillant (8).

5. Procédé selon la revendication 4,
**caractérisé en ce que**
le profil extérieur (9) est un profil de courroie.
